# EUROPEAN PATENT APPLICATION

(11) **EP 4 749 491 A1**
(43) Date of publication of application: **27.05.2026**
(21) Application number: 24214640.5
(22) Date of filing: 21.11.2024
(51) Int. Cl.: G06F 21/57

(54) **SYSTEM AND METHOD FOR VULNERABILITY SEVERITY MANAGEMENT**

(71) Applicant: PlaxidityX Ltd., 5252171 Ramat Gan (IL)
(72) Inventor: Lavi, Oron, 5252171 Ramat Gan (IL); Bari-Ephraim, Yael, 5252171 Ramat Gan (IL)
(74) Representative: Aumovio Corporation

(57) **Abstract**

A system and method for automatically rating, with respect to one or more systems, a set of vulnerabilities of components includes prioritizing a set of vulnerabilities of the components according to at least one of a risk severity of a vulnerability, characteristics of a vulnerability, a component or characteristics of the component, a system or characteristics of the system, usage of a system or a component, a configuration parameter, and the number of systems including a common component; and providing information related to a set of one or more vulnerabilities and their associated rate.

## Description

The present invention relates generally to protecting systems from external attacks. More specifically, the present invention relates to automatically organizing a set of vulnerabilities of a system or component.

### BACKGROUND OF THE INVENTION

Modern automotive, aircrafts, marine vessels and/or IoT systems are complex environments consisting of multiple components, systems, subsystems and composite systems in addition to multiple types of communication channels and interfaces. Each component or system may have, or may suffer from, several vulnerabilities. A "vulnerability" as referred to herein can be any attribute of a system which can be exploited. Accordingly, sorting or rating vulnerabilities of a system is critical to the security of the system.

### SUMMARY OF THE INVENTION

An embodiment of the invention includes a method prioritizing risk severities, the method including obtaining a list of components included in a set of systems; automatically rating, with respect to one or more systems, a set of vulnerabilities of the components according to at least one of: a risk severity of a vulnerability, characteristics of a vulnerability, a component or characteristics of the component, a system or characteristics of the system, usage of a system or a component, a configuration parameter, and the number of systems including a common component; and providing information related to a set of one or more vulnerabilities and their associated rate.

A method can further include receiving an indication of a newly identified vulnerability; automatically adding the newly identified vulnerability to the set of vulnerabilities to produce an updated set of vulnerabilities; and automatically rating, with respect to the systems, the updated set of vulnerabilities. A method can further include automatically suggesting, with respect to a vulnerability of a component in the list and an associated risk severity, an alternative component which does not suffer from the vulnerability and the associated risk severity; wherein suggesting the alternative component is based on at least one of: a risk severity of the vulnerability, vulnerabilities of the component and of the alternative component, characteristics and usage of the component and of the alternative component, compatibility of the component and of the alternative component, and resources required for replacing the component by the alternative component.

A method can further include identifying, with respect to a vulnerability, a first set of versions of a component that suffers from the vulnerability and a second set of versions of the component that does not suffer from the vulnerability. A component included in a system can be one of: a software component, a hardware component, and a combination thereof. Obtaining the list of components can include receiving, for at least some of the components, descriptive information of components and vulnerabilities from a manufacturer or provider of a component or system.

A risk severity of a first vulnerability of a first component can be determined according to at least one of: a second vulnerability of the first component, an inclusion of a second component in the same system, and a vulnerability of a second component included in the same system. Rating of risk severities can be performed upon at least one of: determining a component was added to a system and updating the list of components, determining a component was removed from a system and updating the list of components, and determining a component was updated or modified. A method can update a list of components according to at least one of: information received from an external source, and automatically discovering a component in the system.

A rating can be according to metadata associated with a component. A method can further include associating a set of systems or subsystems with a composite system and wherein the rating is with respect to the composite system. A risk severity of a vulnerability can be determined based on at least one of: common vulnerability enumeration (CVE) metrics, common vulnerability scoring system (CVSS) data, a time since the vulnerability was reported/published/exposed/known, the number of people exposed to the existence of the vulnerability, characteristics of a component having the vulnerability, types and number of components in a system, interfaces of a component having the vulnerability, a protocol used, and automotive or internet of things (IoT) standards.

A risk severity can be determined according to an aspect related to at least one of: privacy, safety, operational, digital commerce and finance. A risk severity can be determined according to at least one of: a system, an exploitability, a context of a system, a usage of a system, architecture, function, attributes, interfaces, an operational mode of a system, components included in a system, a type/functionality/context/usage/'operational mode' of at least some of the components in a system, and a regulation.

A method can further include automatically selecting to update a development management system according to a risk level of a vulnerability. A risk severity can be determined according to the level of protection of code and data in a component. A solution to the aforementioned drawbacks is achieved by the subject matter of the appended independent claims. The dependent claims disclose optional embodiments thereof. Other aspects and/or advantages of the present invention are described herein.

### BRIEF DESCRIPTION OF THE DRAWINGS

Non-limiting examples of embodiments of the disclosure are described below with reference to figures attached hereto that are listed following this paragraph. Identical features that appear in more than one figure are generally labeled with the same label in all the figures in which they appear. A label labeling an icon representing a given feature of an embodiment of the disclosure in a figure may be used to reference the given feature. The dimensions of features shown in the figures are chosen for convenience and clarity of presentation and are not necessarily shown to scale. For example, the dimensions of some of the elements may be exaggerated relative to other elements for clarity, or several physical components may be included in one functional block or element. Further, where considered appropriate, reference numerals may be repeated among the figures to indicate corresponding or analogous elements.

The subject matter regarded as the invention is particularly pointed out and distinctly claimed in the concluding portion of the specification. The invention, however, both as to organization and method of operation, together with objects, features, and advantages thereof, may best be understood by reference to the following detailed description when read with the accompanied drawings. Embodiments of the invention are illustrated by way of example and not limitation in the figures of the accompanying drawings, in which like reference numerals indicate corresponding, analogous or similar elements, and in which:
Fig. 1 shows a block diagram of a computing device according to illustrative embodiments of the present invention;
Fig. 2 shows a system according to illustrative embodiments of the present invention;
Fig. 3 shows a system according to illustrative embodiments of the present invention; and
Fig. 4 shows a flowchart of a method according to illustrative embodiments of the present invention.

### DETAILED DESCRIPTION

Embodiments of the invention provide and enable new ways to automatically organize vulnerabilities of a system or component. More specifically, embodiments automatically rate, prioritize, score, sort, categorize, classify or otherwise organize a set of vulnerabilities of a system or component. The term "vulnerability" as used and referred to herein refers or relates to the information of, or related to, the vulnerability, e.g., published information, values, text and metadata. Rating a vulnerability as referred to herein can be, or mean, associating the vulnerability with a rate.

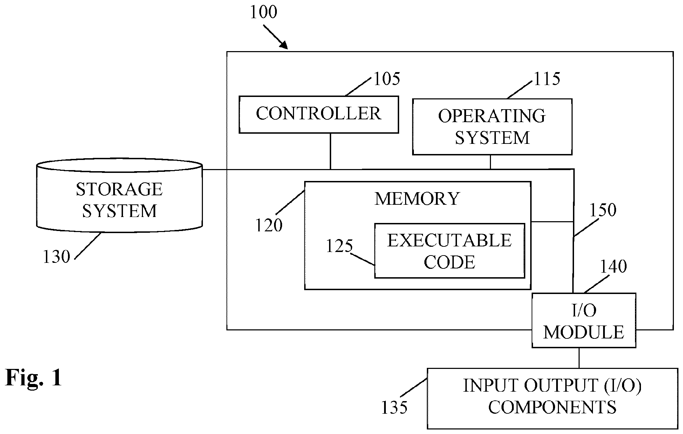

Reference is made to Fig. 1, showing a non-limiting, block diagram of a computing device or system 100 that may be used by, or included in, a system according to some embodiments of the present invention. For example, an application vulnerability severity manager as further described herein may be or may include a computing device 100. In another case, an electronic control unit (ECU) can be a computing device 100 installed in a vehicle, e.g., an ECU 250, or a sensor 251 as further described herein. For the sake of clarity and simplicity, the term ECU will be used herein, however, it will be understood that any relevant components or elements may be applicable, e.g., IoT devices, smart sensors and the like.

In some embodiments, computing device (or system) 100 includes a controller 105 that is a hardware controller. For example, computer hardware processor or hardware controller 105 can be, or can include a central processing unit processor (CPU), a chip or any suitable computing or computational device. In some embodiments, computing system 100 includes a memory 120, an operating system (OS) 115, executable code 125, a storage system 130, communication infrastructure 150, input/output (I/O) module 140 and I/O components 135 which may be detachably connected to computing device 100. In some embodiments, controller 105 (or one or more controllers or processors, possibly across multiple units or devices) is configured (e.g., by executing software or code) to carry out methods described herein, and/or to execute or act as the various modules, units, etc., for example by executing software or by using dedicated circuitry. More than one computing device 100 may be included in, and one or more computing devices 100 may be, may function, or may act as the components of a system according to some embodiments of the invention.

In some embodiments, OS 115 includes any code segment (e.g., one similar to executable code 125 described herein) designed and/or configured to perform tasks involving coordination, scheduling, arbitration, supervising, controlling or otherwise managing operation of computing device 100, for example, scheduling execution of software programs or enabling software programs or other modules or units to communicate. For example, OS 115 can be a commercial operating system, e.g., QNX or Linux.

In some embodiments, memory 120 is a hardware memory. For example, memory 120 may be, or may include machine-readable media for storing software e.g., a Random-Access Memory (RAM), a read only memory (ROM), a memory chip, a flash memory (referred to herein as flash), a volatile and/or non-volatile memory or other suitable memory units or storage units. Memory 120 may be or may include a plurality of, possibly different, memory units. In some embodiments, memory 120 is a computer or processor non-transitory readable medium, or a computer non-transitory storage medium, e.g., a RAM. Some embodiments may include a non-transitory storage medium having stored thereon instructions which when executed cause the processor to carry out methods disclosed herein.

Executable code 125 can be software, an application, a program, a process, task or script. A program, process, task, application or software as referred to herein may be any type of instructions, e.g., firmware, middleware, microcode, hardware description language etc. that, when executed by one or more hardware processors or controllers 105, cause a processing system or device (e.g., system 100) to perform the various functions described herein. In some embodiments, executable code 125 is executed by controller 105 possibly under control of operating system 115.

For example, executable code 125 may be an application (e.g., application vulnerability severity manager (VSM) 282 described herein) that uses list of components included in a set of systems to automatically rate, score or otherwise organize, with respect to one or more systems, a set of vulnerabilities of the components. For example, the application can rate, prioritize, score, sort, categorize, classify or otherwise organize the set of vulnerabilities according to multiple aspects, e.g., a risk severity of a vulnerability, characteristics of a vulnerability, a component or characteristics of the component, a system or characteristics of the system, usage of a system or a component, a configuration parameter, and the number of systems including a common component. VSM 282 can provide useful information to a human and to another system. As described, rating a vulnerability can be or can include associating the vulnerability with a risk severity or associating the vulnerability with a score or any other value or measure which in turn can be used, e.g., in order to prioritize handling or addressing the vulnerability.

For example, executable code 125 such as VSM 282 can show, on a computer screen, a simple list or table showing the most critical (or most urgently needing attention) vulnerability at the top of the list. Considering the amount of information of each vulnerability, possible interrelations between vulnerabilities as well as many other complex aspects, providing a list with the top most critical vulnerability of a system made of hundreds of components is a task neither human nor system or method has achieved.

Although, for the sake of clarity, a single item of executable code 125 is shown in Fig. 1, a system according to some embodiments of the invention may include a plurality of executable code segments similar to executable code 125 that may be loaded into memory 120 and cause controller 105 to carry out methods described herein.

Executable code 125 may be, or may include several applications, services, routines or other software modules or components. It will be understood that components of a system (e.g., components of system 260) as described herein may be software components such as applications, services, routines, or other software components.

Storage system 130 can be, or may include any storage unit, architecture, or hardware. For example, storage system can be, or can include, a universal serial bus (USB) device, a RAM unit, or a flash memory connected to, or included in an ECU 250 as further described herein. In some cases, computing device is a server and storage system 130 is a solid-state drive (SSD) or hard disk drive. In some embodiments, some of the components shown in Fig. 1 may be omitted. For example, in an ECU 250 in the form of computing device 100, storage system 130 may be a non-volatile memory (e.g., a flash memory) included in memory 120 of an ECU, in yet other cases, storage system 130 may be a portion of a RAM, e.g., a portion of memory 120 as described. Accordingly, although shown as a separate component, storage system 130 may be embedded or included in system 100, e.g., in memory 120 of an ECU 250, sensor 251 or VSM 282 as further described herein.

Computing device 100 may include an internal communication infrastructure 150 that may be, for example, a communication bus, e.g., a Controller Area Network (CAN) or other bus, or other system connected to controller 105, operating system 115, memory 120 and I/O module 140 enabling controller 105, operating system 115, memory 120 and I/O module 140 to communicate. I/O module 140 may include ports, or other hardware outlets enabling external devices to communicate with internal components, e.g., I/O module 140 may enable an external device to write data to memory 120, send commands to controller 105 etc.

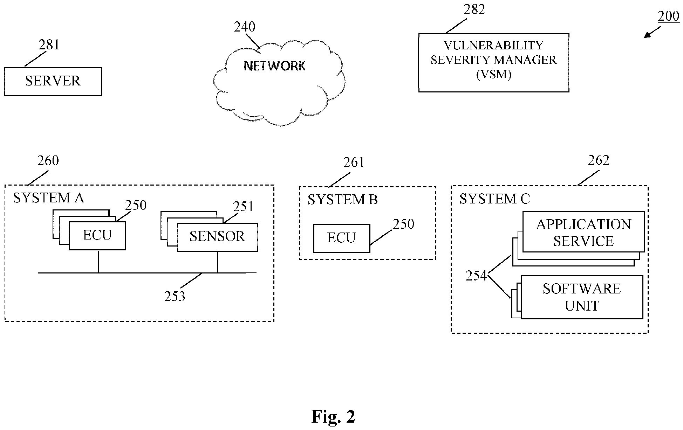

I/O components 135 may be used for connecting (e.g., via included ports) or they may include: a mouse; a keyboard; a touch screen or pad or any suitable input device. I/O components may include one or more screens, touchscreens, displays or monitors, speakers, and/or any other suitable output devices. Any applicable I/O components may be included in, or connected to, computing device 100 as shown by I/O components 135, for example, a wired or wireless network interface card (NIC) or chip, a universal serial bus (USB) device or an external hard drive may be included in I/O components 135. For example, when included in an ECU 250, I/O components 135 may be a chip that enables the ECU 250 to communicate with other ECUs 250 or sensors 251 as shown in Fig. 2 and described herein. In other examples, I/O components 135 enable an ECU 250 to store/retrieve data from a storage device, e.g., store/retrieve data in/from flash memory 223. Accordingly, internal communication infrastructure 150 and I/O components 135 enable applications and services running on, or executed by, computing device 100 to communicate with external entities, e.g., a server on the internet. For the sake of simplicity, storage system 130 is shown as connected to internal communication infrastructure 150, however, storage system 130 may be connected via I/O module 140, e.g., a port therein.

A system according to some embodiments of the invention may include components such as, but not limited to, a plurality of central processing units (CPU) or any other suitable multipurpose or specific processors, controllers, microprocessors, microcontrollers, field programmable gate arrays (FPGAs), programmable logic devices (PLDs) or application-specific integrated circuits (ASIC). A system according to some embodiments of the invention may include a plurality of input units, a plurality of output units, a plurality of memory units (e.g., memory 120 in an ECU may include a flash memory and a RAM), and a plurality of storage units. A system may additionally include other suitable hardware components and/or software components. In some embodiments, a system may include or may be, for example, a server computer, a network device, and any number of devices, e.g., internet of things (IoT) devices, ECUs in a vehicle, e.g., ECUs included in a car, a train, a boat or an airplane.

Reference is made to Fig. 2 which shows a system 200 according to illustrative embodiments of the present invention. As shown in Fig. 2, a system may include a VSM 282, server 281, network 240 and a set of systems 260, 261 and 262.

Server 281 can be a web server, an in-house or in-lab server or any other suitable computer. VSM 282 can be a computing device 100, e.g., a server running a VSM 282 application. Network 240 can be any relevant network which enables elements in Fig. 2 to communicate, e.g., a private or public IP network, the Internet, or a combination thereof. It will be noted that at least some of the components and elements shown in Fig. 2 as included in system 200 are optional and can be omitted in some cases or embodiments.

A system 260 with respect to which a VSM 282 can process vulnerability information, and provide valuable output as described, can be a composite or complex system including several ECUs 250 and/or a number of sensors 251 as well as an internal communication infrastructure 253 that can be, for example, a bus, CAN or Ethernet. For the sake of clarity, not all possible elements in a composite or complex system are shown, for example, whether or not a storage device such as storage 130 is present on, or connected to infrastructure 253 is important with respect to security, e.g., by enabling an attacker to store data in the system. Accordingly, information such as whether or not a system includes storage facilities may be known to, and maybe considered or taken into account by, VSM 282 when analyzing and processing data as described.

In other cases VSM 282 can process data of system B 261 which is, or includes a single ECU 250, in yet other cases, VSM 282 can organize vulnerabilities of system C 262 which generally includes software applications, services or units 254. It will be understood that software units can be software modules, software routines, software libraries and the like, for the sake of simplicity and clarity, these elements are collectively referred to herein as software units 254. For example, system C 262 may be an image which is used for updating ECUs 250 as known in the art.

Although vehicles such as cars are mainly described herein, other vehicles such as ships, trains and aircrafts are similarly applicable, it will be understood that the scope of the invention is not limited by the type, usage or nature of systems 260, 261 and 262.

ECUs 250, sensors 251 and software units 254 may be collectively referred to hereinafter as ECUs 250, sensors 251 and software units 254, or individually as ECU 250, sensor 251 and software units 254, merely for simplicity purposes. It will be understood that as referred to herein, a system such as systems 260, 261 and 262 can be any system or component, e.g., a vehicle, an ECU or an IoT system or unit.

Sensors 251 can include more than a mere temperature or pressure sensing or measuring unit, e.g., a sensor 251 can include a computing device 100 or parts thereof, e.g., a sensor 251 may include a memory 120, a controller 105 and/or executable code 125 and the sensor 251 may store and process measurements, receive network packets and send network packets, messages or frames. For example, a sensor 251 may be an oil pressure sensor, a temperature sensor, and the like, e.g., when an embodiment is, or is included in, a train or car or another vehicle. When an embodiment is included in an airplane, ship or spacecraft, a sensor 251 may be a unit that senses or measures, for example, elevation, acceleration, air speed or flow and the like. Accordingly, a sensor 251 can be attacked and thus its set of vulnerabilities may be of importance with respect to security or cybersecurity.

ECUs 250 may be, or may include any components of, computing device 100. For example, an ECU 250 may include a controller 105, a memory 120 (e.g., RAM and Flash memories), may include an internal communication infrastructure 150 in the form of a bus, and may include an I/O module 140. Typically, ECUs 250 are associated with, or designed for, specific components, e.g., a first ECU 250 may monitor and control an engine in a car, and a second ECU 250 may monitor and control the windows. When an embodiment is included in an airplane, ship or spacecraft, an ECU 250 may be a line-replaceable unit (LRU), a lower line-replaceable unit (LLRU), a line-replaceable component (LRC), or a line-replaceable item (LRI) component.

Communication infrastructure 253 may be any communication line, bus, or network, e.g., an Ethernet network, a CAN bus and the like. For the sake of simplicity, communication infrastructure 253 is referred to herein as network 253 and communication infrastructure 150 is referred to herein as bus 150. Memory 223 may be or may include components of memory 120 as described herein. RAM 222 may be as known in the art, e.g., used by controllers 105 in a system in order to run program applications as known in the art. Communication infrastructure 253 may be any suitable network that enables ECUs 250 and sensors 251 to communicate or exchange digital information, as well as to read/write data from/to memories 222 and 223. Communication infrastructure 253 may be, may include, or may comprise any suitable bus or network infrastructure and support any suitable protocols, e.g., in-vehicle network 253 may be an Ethernet network, a CAN network or a combination thereof. Protocols such as, internet protocol (IP), transmission control protocol (TCP), Scalable Service-Oriented MiddlewarE over IP (SOME/IP), Universal Measurement and Calibration (XCP), Diagnostics over Internet Protocol (DoIP) and Unified Diagnostic Services (UDS). Any other protocols that may be applicable and used as described herein with reference to "protocols" or "a specific protocol".

Accordingly, numerous elements of communication infrastructure 253 are implied but not shown, e.g., switches, routers, gateways etc. It will be recognized that embodiments of the invention are not limited by the nature of communication infrastructure 253.

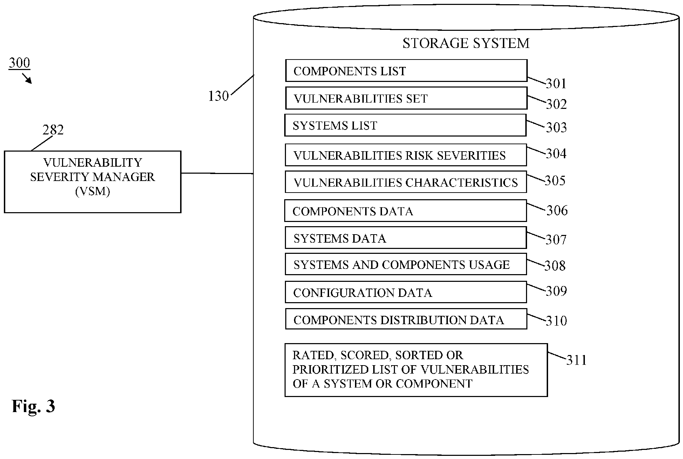

Reference is made to Figs. 3 which shows a system according to illustrative embodiments of the present invention. As shown, in embodiments, VSM 282 is operatively connected to a storage 130 where, in addition to other data, information related to systems, components and vulnerabilities is stored. Storage 130 can be directly connected to VSM 282, or it may be connected over a network, e.g., storage 130 can be remote or cloud storage. Moreover, VSM 282 can use more than one storage 130, e.g., a local, physically connected storage 130 and a cloud, remote storage 130 connected to a web server.

As shown, in embodiments storage 130 stores, or includes the following data structures, elements or objects: components list 301, vulnerabilities set 302, systems list 303, vulnerabilities risk severities 304, vulnerabilities characteristics 305, components data 306, systems data 307, systems and components usage 308, configuration data 309, components distribution data 310 and rated, scored, sorted or prioritized list of vulnerabilities of a system 311. It will be understood that the terms "component" and "components" as used herein refer or relate to hardware components or software components, for example, a component in components list 301 can be a chip or sensor or it can be an application or an executable code 125.

In embodiments, components list 301 is a data structure, element or object which includes a list of components and metadata as received or obtained from various sources. For example, components list 301 can include a list of components in a system which was received or obtained from a manufacturer or provider of a component or system. Descriptive information can also be obtained or received from a manufacturer or provider of a system or component. Such descriptive information can be stored in components list 301 or in Components data 306, Systems data 307 or elsewhere on storage 130.

In embodiments, vulnerabilities set 302 is a data structure, element or object which includes a set or list of vulnerabilities of systems or components. For example, vulnerabilities set 302 can include a first set of vulnerabilities of a first system, a second set of vulnerabilities of a second system and a third set of vulnerabilities of a component. Vulnerabilities set 302 of a system can include, describe and or list all known vulnerabilities of a system or component and vulnerabilities therein may be rated, scored, sorted, or prioritized to produce an organized list of vulnerabilities as shown by block 311.

In embodiments, systems list 303 is a data structure, element or object which includes a list and data of systems for which VSM 282 can organize vulnerabilities as described. For example, VSM 282 generates and provides.

a first rated, scored, sorted, or prioritized list of vulnerabilities for a first system included in systems list 303 and a second, different rated, scored, sorted or prioritized list of vulnerabilities for a second system included therein.

In embodiments, vulnerabilities risk severities 304 is a data structure, element or object which can include an association of vulnerabilities with respective severities. Embodiments can keep and use more than one vulnerability risk severities 304 objects, e.g., one vulnerabilities risk severity 304 object reflecting information gathered, received, or obtained from external sources and another vulnerability risk severities 304 object reflecting severities assigned to, or associated with vulnerabilities by VSM 282.

In embodiments, vulnerabilities characteristics 305 is a data structure, element or object which can be or include any information describing characteristics or any other relevant aspect of vulnerabilities. In embodiments, VSM 282 generates a vulnerability characteristics 305 object and stores therein information describing vulnerabilities. For example, VSM 282 stores and uses, in a vulnerability characteristics 305 (or in vulnerabilities risk severities 304) object, common vulnerability enumeration (CVE) data or metrics, e.g., a unique identifier for each vulnerability, as listed in the National Vulnerability Database (NVD) or VSM 282 stores common vulnerability scoring system (CVSS) data or metrics, e.g., base, temporal and environmental metrics for each vulnerability as known in the art.

VSM 282 can store and use in a vulnerability characteristics 305 object the date/time a vulnerability was made public, this information can be used by VSM 282 when sorting, rating or prioritizing vulnerabilities, e.g., since the longer a vulnerability is known, the larger is the number of people exposed to the existence of the vulnerability and thus the more likely are more hackers to try and exploit it.

In embodiments, VSM 282 stores and uses in a vulnerability characteristics 305 object information related to characteristics of a component having the vulnerability. For example, information indicating whether or not the component (or a hosting component) includes a network interface, a system in which the component is included and the like.

In embodiments, VSM 282 stores and uses in a vulnerability characteristics 305 object information related to types and number of components in a system. For example, if a vulnerability is of a specific component which is part of a system with additional, other components, then types of the other components of references or descriptions can be included in a vulnerability characteristics 305 object.

In embodiments, VSM 282 stores and uses in a vulnerability characteristics 305 object information related to interfaces of a component having the vulnerability, e.g., network interfaces, hardware interfaces, service ports, service dongle interfaces and the like. Other data or information that VSM 282 as needed can be indications or references to protocols or standards used by the component having the vulnerability, e.g., protocols and standards related to the automotive industry, internet of things (IoT) standards and the like.

In embodiments, VSM 282 stores and uses in a vulnerability characteristics 305 object information related to at least one of: privacy, safety, operational, digital commerce and finance. For example, a first vulnerability can be related to money theft and can be marked, or indicated as such by VSM 282, a second vulnerability can be related to privacy, e.g., stealing personal information and a third vulnerability can be related to safety, e.g., may jeopardize the brake system of a car. By recording aspects such as privacy, safety, operational, and digital commerce finance for vulnerabilities, VSM 282 can prioritize vulnerabilities according to these aspects as well as other aspects thus producing a complex risk severity metric which is far superior to any metric known in the art.

In embodiments, VSM 282 stores and uses in a vulnerability characteristics 305 object information related to any one of: a system or component, an exploitability of a vulnerability, a context of a system or component, a usage of a system or component, architecture of a system or component, functions, attributes, interfaces and operational modes of a system or component, components included in a system, a type, functionality, context, usage, of at least some of the components in a system, regulation and models or versions of software units or hardware units a vulnerability is relevant to.

Vulnerabilities can depend on a context. Accordingly, VSM 282 can include or store and use, in a vulnerabilities characteristics 305 object information that maps, defines, or describes characteristics of a vulnerability with respect to context or state of the relevant (hosting) system or component. For example, in the case where systems 260, 261 and 262 are included in a vehicle, vulnerabilities characteristics 305 can associate a vulnerability with a first risk severity level or number when the vehicle is connected to the internet and with a second, e.g., lower risk severity level or number if the vehicle is not equipped to connect to the internet. Other contexts may be whether a vehicle is stationary or in transit, the vehicle is in service, whether or not the engine is running and so on. For example, a vulnerability in the braking control system of a vehicle is of low-risk severity when the vehicle is parked or being serviced.

In embodiments, components data 306 is a data structure, element or object which includes a description of hardware components, e.g., information from a data sheet or bill of material (BOM) of an ECU 250 or of a sensor 251. For example, components data 306 includes, for each ECU 250 in systems 260, 261 and 262, the type of ECU 250, its functions, the subsystems the ECU 250 controls and so on. Components data 306, can include a full description, lists and other information describing components which are software units such as applications and software units 254 in system 262. It will be understood that both system 261 and 262 can be included in system 260, e.g., a software application 254 in system 262 can be executed by one of ECUs 250 in system 260.

In embodiments, systems data 307 is a data structure, element or object which includes information describing a system, e.g., the list of hardware and software components or units, description of internal and/or external interfaces, description of communication buses or networks in the system and so on. Any of systems data 307, components data 306, systems list 303 and components list 301 can include, list or indicate software libraries included in components, hardware components included in systems, subsystems or composite systems or which target systems as described. Accordingly, VSM 282 can sort or prioritize risk severities or vulnerabilities according to any asset or resource included in a system as further described herein. For example, VSM 282 can associate a set of composite systems with a respective set of variants of components, e.g., a set of ECU 250 or services or applications 254 and thus, VSM 282 can prioritize risks severities according to the components in a system.

In embodiments, systems and components usage 308 is a data structure, element or object which includes information describing usage of systems and components. For example, the usage of a specific ECU is for controlling the brakes of a vehicle, the usage of a second ECU 250 is in controlling the infotainment system, the usage of a Bluetooth software unit 254 is to provide network access and so on.

In embodiments, configuration data 309 is a data structure, element or object which can be any information governing the operation of VSM 282. For example, configuration data 309 can indicate that a specific vulnerability in a specific component is to be rated or scored high, that a specific vulnerability should be ignored or configuration data 309 can otherwise control or govern the rating, scoring or prioritizing vulnerabilities as described herein. Configuration data 309 can indicate which components are available in a vehicle or system and/or which of the available components is enabled or disabled, such information can be used in an automatic prioritizing of vulnerabilities as described, for example, the risk severity of a vulnerability of a disabled component can be set low by VSM 282 or the risk severity of a vulnerability of a component which is not available in a system can be set to zero "0".

In embodiments, components distribution data 310 is a data structure, element or object which describes, quantifies or enumerates the distribution of a component or system, e.g., how many components or systems are currently out in the field, possibly exposed to an attack. Components distribution data 310 can include a forecast or estimate of the number of components or systems expected to be operational or deployed in a given time window.

For the sake of clarity and simplicity, any information or data stored in one or more of components list 301, vulnerabilities set 302, systems list 303, vulnerabilities risk severities 304, vulnerabilities characteristics 305, components data 306, systems data 307, systems and components usage 308, configuration data 309 and components distribution data 310 is referred to herein as data or information in objects 301-310.

In embodiments, rated, scored, sorted or prioritized list of vulnerabilities of a system or component 311 is a data structure, element or object which is produced by VSM 282. For the sake of simplicity and clarity, rated, scored, sorted, or prioritized list of vulnerabilities of a system or component 311 will be referred to herein as list 311. As described herein, list 311 can be sorted or prioritized according to any aspect or event according to more than one aspect. For example, VSM 282 can sort vulnerabilities in list 311 according to their respective severities, then according to whether or not a remedy is available, and then according to the amount of effort or resources required to eliminate the vulnerability.

Embodiments obtain a list of as well as other information for, or related to, a set of components, systems or subsystems which are included in a set of systems. Embodiments automatically associate, with respect to one or more systems, a set of vulnerabilities of the components of the systems with a respective set of ratings. For example information as described in objects 301-310 can be collected and used by VSM 282 for system 260, that is VSM 282 can use information as in objects 301-310 for each of ECUs 250 and/or sensors 251 and/or bus 253 of system 260. For example, at least for some components in system 260, information stored in objects 301-310 can be received from a manufacturer or provider of a component or system. Information included in objects 301-310 can be, or can be based on, descriptive information of components and vulnerabilities received from a manufacturer or provider of a component or system.

For example, a manufacturer of a vehicle or a manufacturer of an ECU 250, sensor 251 or a provider of a software unit 254 can provide information describing vulnerabilities of the ECU 250, sensor 251or software 254 as well as any other description. A list of components or systems can be automatically and/or dynamically obtained and updated. For example, VSM 282 or another unit can send probe messages or queries which cause components such as ECUs 250 or sensors 251 or services or applications 254 to respond with identifying information, e.g., in response to a query, an ECU 250 may, in response to a query, respond with a model number which uniquely identifies the ECU and which can be used to obtain extensive information about the ECU, e.g., data sheets, BOM or software BOM (sBOM) and the like as well as information describing known vulnerabilities of the ECU etc.

Embodiments of the invention automatically rate, prioritize, score, sort, categorize, classify or otherwise organize a set of vulnerabilities of a system or component. For example, using information in objects 301-310, VSM 282 calculates, for a set of at least some of the vulnerabilities of at least some of the components in system 260, VSM metrics values, scores, priorities, rates, classifications or any other metadata that can be used for sorting, rating or prioritizing vulnerabilities of a system as described.

that can be numerical and/or other representations of various aspects of cybersecurity and cyber vulnerabilities. For example, VSM 282 can calculate, for each of a set of vulnerabilities of each component in a system, a criticality VSM metric which reflects how critical the vulnerability is, e.g., how high or severe will the impact on the system be, if the vulnerability is exploited. Considering the large number of components, e.g., ECUs and sensors, that can be included in a system, their respective many different vulnerabilities, possible dependencies or relations between vulnerabilities of different components, and other aspects, identifying, in the set of all of the vulnerabilities of a system, a single vulnerability, or even a small set of vulnerabilities, which is the most critical is a challenge met by embodiments of the invention.

To rate, prioritize, score, sort, categorize, classify or otherwise organize a set of vulnerabilities of a system, e.g., generate a 311 object for system 260 wherein the entire set of vulnerabilities of all components of system 260 is sorted or prioritized, VSM 282 can analyze and consider, or take into account various aspects. For example, in embodiments, VSM 282 rates or scores vulnerabilities according to at least one of: a risk severity of a vulnerability, characteristics of a vulnerability, a component or characteristics of the component, a system or characteristics of the system, usage of a system or a component, a configuration parameter, and the number of systems including a common component.

For example, a risk severity of a vulnerability can be in the form of a CVE number or value or a CVSS metric may be stored, for some or all of the vulnerabilities of all of the components of system 260, in storage 130 as described, and VSM 282 can use such numbers, values or metrics to calculate a score or rate for a vulnerability. It is noted that information other than that of CVE or CVSS is used by VSM 282 to generate a scored list 311.

For example, VSM 282 can calculate a score of or for a vulnerability based on characteristics of a vulnerability. Characteristics of a vulnerability can be, or include any aspect, e.g., what components or assets does the vulnerability expose, or leave unprotected, how much effort or skill does one require in order to exploit the vulnerability etc. To calculate a score for a vulnerability, VSM 282 can look at the relevant component or characteristics of the component which has the vulnerability. For example, either by default or based on a configuration parameter reflecting a user's preference, VSM 282 assigns higher score to vulnerabilities of the ECU controlling the brakes of a vehicle than to vulnerabilities of the ECU controlling the lights of the vanity mirror. For example, configuration data 309 can include weights or other values that can be used, by VSM 282 to assign different scores to possibly similar vulnerabilities of different components. For example, a vulnerability that enables writing to a memory in a component that is connected to the internet can be scored, by VSM 282, higher than the score given to the same vulnerability in a component that cannot access the internet. Similarly, the same vulnerability can be scored by VSM 282 differently when in an ECU controlling the air conditioning system and when in an ECU controlling the braking system of a car or train. Similarly, a score may be given to a vulnerability, by VSM 282, based on the relevant system or characteristics of the system, e.g., the more critical the system, the higher the score, the more ways for a vulnerability to progress through the system and to other systems the higher the score etc. Usage of a system or a component can be taken into account by VSM 282 when calculating a score for a vulnerability, for example, lower score is given to less critical systems or components while higher scores are assigned to critical systems or components.

VSM 282 can rate, prioritize, score, sort, categorize, classify or otherwise organize a set of vulnerabilities of a system, e.g., generate a 311 object for system 260 based on, or according to, any number of configuration parameters. For example, in a first run VSM 282 can generate a sorted list of vulnerabilities of system 260 where the list is sorted such that the most critical vulnerabilities are grouped together, e.g., at the top and are further sorted according to the amount of resources or efforts required to eliminate them, in a second run, for the same system 260, VSM 282 can sort vulnerabilities according to risk levels of jeopardizing private information of users, or, in a third run, VSM 282 can sort vulnerabilities according to risks related to financial or banking frauds.

VSM 282 can rate, prioritize, score, sort, categorize, classify or otherwise organize a set of vulnerabilities according to the number of systems including a common component. For example, if two generally same or similar first and second applications 254 suffer from the same vulnerability, but the first application 254 is installed in millions of cars and the second application 254 is only installed in a limited set of cars then, taking into account the number of systems including a common component, VSM 282 will assign the vulnerability of the first application 254 with a high risk level or score and assign the same vulnerability of the second application 254 with a lower risk level or score. For example, provided with fleet information from relevant manufacturers, providers etc., VSM 282 can calculate, for a set of vulnerabilities, an exposure VSM metric which reflects how spread, within a fleet or set of systems, a vulnerability is. For example, based on how many components who suffer from a specific vulnerability were sold, manufactured, installed in a specific model of a specific car and so on, VSM 282 can determine whether or not a vulnerability is well spread within a fleet, e.g., a vulnerability is in a specific ECU 250 which controls a mechanical lift and installed in many trucks in a fleet.

For example, if a vulnerability is in, or of, a specific ECU 250 in system 261 then VSM 282 can use a database or other resource provided by a manufacturer of systems that include the specific ECU 250 to determine how many units of the specific ECU 250 were manufactured, sold, used, which systems the specific ECU 250 is included in, e.g., cars, trains, airplanes, IoT devices etc. Since information related to components included in vehicles is generally open to the public, willingly shared by manufacturers of these components, VSM 282 can readily obtain information as described herein. For example, public databases can be accessed through the internet, or they can be downloaded to storage system 130.

In embodiments, VSM 282 provides information related to a set of one or more vulnerabilities and their associated rate. For example, VSM 282 can provide object 311 which can include a sorted set of vulnerabilities of system 260, or of system 262.

In embodiments, a method includes receiving an indication of a newly identified vulnerability; automatically adding the newly identified vulnerability to the set of vulnerabilities to produce an updated set of vulnerabilities; and automatically rating, with respect to the systems, the updated set of vulnerabilities.

An indication of a newly discovered or identified vulnerability can come from various sources, for example, public frameworks (e.g., CVSS, CVE), systems and websites publish newly discovered vulnerabilities. Either automatically, e.g., upon detecting that data in storage 130 was modified, or periodically or upon receiving a command from a user, VSM 282 can update data in objects 301-310 to include information describing the newly discovered or identified vulnerability, process data in storage 130 as described and reproduce a new 311 object as described such that the newly discovered vulnerability is scored and sorted with the rest of the vulnerabilities therein.

In embodiments, a method includes automatically suggesting, with respect to a vulnerability of a component in a list and an associated risk severity, an alternative component which does not suffer from the vulnerability and the associated risk severity. For example, if VSM 282 discovers that a new model of, or software version for, an ECU 250 is available where a specific vulnerability has (or may have) been repaired, resolved, mitigated or eliminated, then VSM 282 suggests to a user to use the new version, e.g., by a popup screen on a computer screen, an automatic email summarizing vulnerabilities of a system or otherwise.

In embodiments, VSM 282 suggests alternative components based on at least one of: a risk severity of the vulnerability, vulnerabilities of the component and of the alternative component, characteristics and usage of the component and of the alternative component, compatibility of the component and of the alternative component, and resources required for replacing the component by the alternative component. A risk severity of the vulnerability which VSM 282 looks at can be, for example, as indicated by the CVSS and/or the CVE frameworks, e.g., on a scale of 0-10 or it can be based on such frameworks, e.g., VSM 282 can increase or decrease a risk severity of a vulnerability, e.g., based on various considerations or configurations as described. Before suggesting to replace a component with an alternative one, VSM 282 looks at, or compares, vulnerabilities of the component to be replaced and vulnerabilities of the alternative component. For example, if the alternative component suffers from a vulnerability with a high-risk severity, or if a vulnerability of the alternative component is one that can risk lives, e.g., related to the brakes, or other a safety system in a vehicle then, e.g., based on a configuration parameter, VSM 282 can avoid suggesting the component. In embodiments, VSM 282 can show or list all alternative components that can potentially replace a component in a system, VSM can list vulnerabilities of all presented alternatives thus enabling a user to select an optimized configuration with respect to vulnerabilities.

In embodiments VSM 282 looks at characteristics and usage of a component and of the alternative component. For example, VSM 282 can be configured to avoid suggesting replacing a first component with a second component unless the usage or intended use of the two is exactly the same, e.g., as stated by manufacturers of the first and second components.

In some embodiments, VSM 282 can be configured to check, or look for, e.g., in a database or in information stored in storage 130 as described, components that are compatible to, or with a component that should be replaced due to a vulnerability. For example, compatibility information can be obtained from manufacturers or providers of components and systems and VSM 282 can use such publicly available compatibility information to look for alternative components which may not suffer from a vulnerability to be repaired or mitigated. For example, compatibility in terms of size, usage, operations, purpose and the like can all be learned from data sheet and other specifications of components, accordingly, VSM 282 can check compatibility of, or between components, down to any depth or extent.

In some embodiments, VSM 282 sorts suggested alternative components according to resources required for replacing a component by an alternative component. For example, replacing a component which is a software library may be ranked as low with respect to resources needed if the new library is available or it may be ranked medium if the new library still needs work before it can be shipped.

In some embodiments, VSM 282 selects or suggests alternative components according to the level of compatibility or according to the number and type of differences between the alternative components. For example, software and hardware components are typically released or provided in versions, where each version typically adds features, fixes bugs and fixes or eliminates vulnerabilities of previous versions. To eliminate or mitigate a vulnerability, VSM 282 can select or suggest a version for updating a component based on compatibility between components, the number and type of differences, based on the complexity of an update, or the benefits of updating to a number of potential versions.

For example, if a vulnerability is known in version 1.0 of a component, and VSM 282 determines the difference between versions 1.0 and 1.2 is very small and version 1.2 indeed fixes critical vulnerabilities, and, in addition, differences between versions 1.0 and 1.3 are significant but version 1.3 only fixes some additional low severity vulnerabilities, then VSM 282 may recommend updating to version 1.2 and not version 1.3, or at least present a list of suggested alternative components to a user. VSM 282 can rank suggested components, e.g., according to compatibility, benefits vs. complexity, compatibility and number and type of differences.

Replacing a hardware component, e.g., in a fleet, can, in many cases, be time and effort consuming and may be marked as such by VSM 282. Accordingly, VSM 282 can help with planning work and resources with respect to repairing or mitigating vulnerabilities of systems, components and products. It is noted that VSM 282 compares the risk severities of vulnerabilities of a component and an alternative component, and VSM 282 will suggest a replacement if at least the risk severity of the vulnerability of the alternative component is lower or less than that of the component to be replaced. Accordingly, VSM 282 can suggest replacing a component such that a vulnerability is completely repaired or mitigated or at least such that the severity is decreased.

In some embodiments, VSM 282 identifies, with respect to a vulnerability, a first set of versions of a component that suffers from the vulnerability and a second set of versions of the component that does not suffer from the vulnerability. For example, a first set of software versions of an application 254, e.g., from version 1.2.17 to version 2.6.64 can all suffer from a vulnerability related to authentication of a user while in all versions from 2.7.0 on, this vulnerability is repaired, e.g., as part of a bug fix. Provided with information describing development including addition of features and bug fixes, VSM 282 can identify some software units (e.g., in terms of versions) that suffer from vulnerabilities and other units that do not suffer from that vulnerability.

A component as described and referred to herein can be a software component, unit, module, library, application and the like (e.g., one of units 254), of a component can be a hardware component, unit or module, e.g., a sensor 251, or a component can be, or can include, both hardware and software, e.g., an ECU 250 with an image stored in an internal memory as known in the art. In some embodiments, obtaining a list of components includes receiving, for at least some of the components, descriptive information of components and vulnerabilities from manufacturers or providers of components or systems.

In some embodiments, a risk severity of a first vulnerability of a first component is determined according, or with respect to, or considering at least one of: a second vulnerability of the first component, an inclusion of a second component in the system which includes the first component, and a vulnerability of a second component included in the system which includes the first component. For example, a vulnerability of a component enabling an unauthorized entity to store data in a memory may be initially rated or scored, by VSM 282, 55 on a scale of 0 to 100, that is, not too severe, however, upon identifying another vulnerability, in the same component, which enables unauthorized entities to log into the component, VSM 282 may raise the severity of the vulnerability which enables unauthorized data storage to 78 since, according to logic configured into VSM 282, in the presence of the unauthorized login vulnerability, the severity of the data storage vulnerability is higher.

In embodiments, VSM 282 is configured to set a score, rate or other metric to a vulnerability of a component based on an inclusion of a second component in the same system which includes the first component. For example, a vulnerability which enables unauthorized entities to log into the component can be scored or rated low by VSM 282 if the relevant component does not include any external interfaces, however, if the component is included in a specific system and is further connected to another component in the specific system which enables communication over the internet then, with respect to the specific system, VSM 282 will raise the risk severity level of the login vulnerability as it now becomes relevant and indeed poses a risk to the specific system. Otherwise described, VSM 282 scores vulnerabilities based on features and resources provided by a number of components in a system. Vulnerabilities of one component in a system can influence the score or rate of vulnerabilities of another. For example, the vulnerability related to data storage described above can be scored low if the relevant component is a stand-alone component, however, in the presence of the vulnerability related to unauthorized login in another component in the same system, the data storage vulnerability will be scored or rated higher by VSM 282 since, in the presence of the login vulnerability the data storage vulnerability becomes exploitable. Otherwise described, VSM 282 calculates scores for vulnerabilities based on interdependencies between the vulnerabilities, that is, the presence or existence of a first vulnerability in a system affects the score of a second vulnerability in the system.

In some embodiments, rating, scoring or otherwise organizing vulnerabilities according to a calculated risk severity is a dynamic process that can be triggered by any change to a system or component. For example, upon detecting or being informed that an ECU 250 was added to, or removed from, system 260, VSM 282 can recalculate and regenerate a 311 object reflecting severity, criticality or any other aspects of vulnerabilities of system 260 after a change was made to it in the form of addition or removal of a component. In another example, an update of a component, e.g., adding/removing/updating capabilities or features to/from/in an application 254 in system 262 (e.g., in the form of a software update) or adding features to a sensor 251 or to an ECU 250 in system 260 will cause VSM 282 to reevaluate the severities of risks posed to a system due to changed or different vulnerabilities of components which were changed, updated, added or removed. Accordingly, VSM 282 can generate a sorted list of vulnerabilities of a system upon any change to a system.

It will be noted that an actual, physical system does not need to be provided to VSM 282 in order for it to perform methods described herein, rather, information as described herein regarding components in a system can be provided to VSM 282 which, based on the info, can generate a list or other structure which sorts, scores prioritizes or otherwise arranges vulnerabilities as described, that is, VSM 282 can work in simulation mode, simulating vulnerabilities and their respective risk levels or risk severities without having to actually build a real actual system.

In some embodiments, the list of components in a system is updated according to at least one of: information received from an external source, and automatically discovering a component in the system. For example, information from a manufacturer of a system can include an updated list of ECUs or sensors in the system and based on such list, VSM 282 can generate (or regenerate) an object 311 as described taking into account the newly added components and features. In some embodiments, rating, scoring or prioritizing vulnerabilities is according to metadata associated with a component. For example, any information included in specifications provided by a manufacturer of a component, information gathered or identified during a testing procedure and the like may be included in, for example, components list 301, systems list 303, vulnerabilities characteristics 305, components data 306, systems data 307, systems and components usage 308 and/or configuration data 309.

In some embodiments, VSM 282 associates a set of components, systems or subsystems with a composite system and then performs the rating, sorting or prioritizing of vulnerabilities with respect to the composite system such that interdependencies between features and vulnerabilities of the composite system are taken into account when calculating risk severities of vulnerabilities as described. For example, inclusion of a web browser application 254 in a composite system (e.g., a vehicle) as described can increase the risk severity of a vulnerability related to storing data in a flash memory of an ECU 250 in the vehicle.

In some embodiments, VSM 282 associates a set of composite systems with a respective set of components, e.g., generate a list of hardware components of a system along with vulnerabilities of each component. A set of components associated with a composite system can be a set of software entities, e.g., applications, services or other software units 254 such as libraries, routines and the like. A list of components in a system (or composite system) can be shown to a user so that the user knows exactly for which system VSM 282 calculated or will calculate a sorted, prioritized set of vulnerabilities as shown by object 311. A list of components can be modified by a user and the modified list can be provided to VSM 282 which in turn can generate a sorted, prioritized list or object 311 based on the list of components provided by a user. Accordingly, embodiment enable and provide an iterative process in which a user can modify elements or components of a system to thus define a system, provide the defined system to VAM 282 and get an in-depth view of vulnerabilities of the defined system in the form of a sorted, prioritized list of vulnerabilities. For example, a list of software libraries or other software units included in each image or other object may be provided to a user by VSM 282 such that the user is made aware of all components in a target system. The user can approve the list and command VSM 282 to sort or prioritize vulnerabilities in a target system as described in the list or the user can modify the list, e.g., add software libraries, remove software entities or replace software applications or services and then, after modifying the definition of a target system, the user can command VSM 282 to generate a sorted, prioritized list of vulnerabilities of the modified, target system. Accordingly, VSM 282 can be used as a development tool enabling production of systems with minimal vulnerabilities.

A risk severity of a vulnerability can be determined, by VSM 282, based on at least one of: CVE and/or CVSS data or metrics, a time since the vulnerability was reported/published/exposed/known, the number of people exposed to the existence of the vulnerability, characteristics of a component having the vulnerability, types and number of components in a system, interfaces of a component having the vulnerability, a protocol used, and automotive or internet of things (IoT) standards.

A risk severity can be determined, by VSM 282, according to an aspect related to at least one of: privacy, safety, operational, and digital commerce finance. For example, a user can indicate, to VSM 282, which aspect (e.g., one of privacy, safety, operational, and digital commerce finance) is of most importance or relevance and VSM 282 can prioritize, rate or sort vulnerabilities of a system according to the indicated preferences of a user. Preconfigured parameters, which can be changed by a user, can dictate to VSM 282 how to treat different vulnerabilities, e.g., assign high risk severity to vulnerabilities related to safety of a vehicle, lower severity rating to vulnerabilities related to privacy and yet even lower severity to vulnerabilities related to digital commerce or finance. Accordingly, a user can define which vulnerabilities are of greater importance and which are of less importance such that vulnerabilities related to various, or different aspects of a system are shown at the top or bottom of a sorted or prioritized list as in object 311. For example, VSM 282 can calculate, for a specific system, the top, most critical vulnerability, which is related to digital commerce or finance, e.g., money theft, or the most critical vulnerability related to privacy, e.g., to identity theft and so on.

A risk severity can be determined, by VSM 282, according to at least one of: a system, an exploitability, a context of a system, a usage of a system, architecture, function, attributes, interfaces, an operational mode of a system, components included in a system, a type/functionality/context/usage/'operational mode' of at least some of the components in a system, and a regulation. In embodiments, VSM 282 automatically updates a development management system according to a risk level of a vulnerability. For example, VSM 282 can update a development system (e.g., Jira^{©} from Atlassian) such that vulnerabilities which were rated high, or which were marked as high or top priority by VSM 282 are repaired or dealt with high priority, e.g., before issues of less importance are addressed. In some cases, a risk severity is determined and associated with a vulnerability as described, by VSM 282, according to a level of protection of code and data in a component. For example, a higher risk severity can be given, by VSM 282, to code which is not encrypted, and a lower risk severity is assigned, by VSM 282 to code which is encrypted or otherwise protected. In another case, VSM 282 associates a higher risk severity to code (e.g., code of a service or application 354) which is encrypted using a long cryptographic key, code or material and a lower risk severity to code which is encrypted using a relatively short (or shorter) cryptographic key, code or material.

Generally and as known in the art, CVSS associates a numerical score with a vulnerability representing the severity rate of a vulnerability. For example, a CVSS score of 2 is considered a low rating, a score of 5 is considered a medium rating and a rating of 9 and above is considered critical. However, although taking various aspects into consideration, e.g., as reflected by the three sets of metrics, neither CVSS nor any other known scoring or rating system or method can determine, quantify or prioritize the severity or criticality of each of a set of vulnerabilities of a set of components in a specific system. This is because the criticality of a specific vulnerability of a specific component can depend, or be a function of, other components in the system and/or the criticality of a specific vulnerability of a specific component can depend, or be a function of, vulnerabilities of other components in the system. Otherwise described, different vulnerabilities of different components in a system are interdependent and, in order to prioritize a set of vulnerabilities of a set of components in a system, such interdependencies need to be accounted for.

For example, although the severity rates of two different vulnerabilities of respective two different components in a system are scored or rated "7" according to CVSS or other scoring system or method, an embodiment of the invention may set the criticality or risk severity of one of them to "9" and the set, or lever the criticality or risk severity of the other to/at "7", e.g., because at the presence of the first vulnerability, the second vulnerability poses a higher risk than it would absence of the first vulnerability.

For example, a first application installed in a vehicle, e.g., a YouTube^{™} application may have (or be associated with) low privileges and may further suffer from a vulnerability that allows or enables a hacker to remotely execute code,) such vulnerability may be assigned, e.g., by CVSS, a risk severity of "5" which is relatively low since the YouTube^{™} application has low privileges. In this example, a second application in the vehicle may enable a user to raise privileges (also known in the art as privilege escalation) of other applications in the vehicle. Upon detecting that these two vulnerabilities are present or coexist in the vehicle, an embodiment will automatically raise the criticality or a risk severity of the YouTube^{™} application from "5" to "8" since, in the presence of the second application and its associated capability (and vulnerability) of raising privileges, the risk level or criticality of the YouTube^{™} application is much higher. The advantages of such automatic setting of criticalities and risk severities which is based on inter-dependencies of vulnerabilities in a system can be readily appreciated by those with ordinary skills in the art.

In another example, a Bluetooth unit or application may suffer from a vulnerability which may be assigned a metric of "6", e.g., according to the CVSS standard or database, however, information in system data 307 indicates that the Bluetooth unit in the system is disabled, in such case, VSM 282 reduces the risk level of the Bluetooth unit and/or application, e.g., to "3" or even "0" thus saving time, effort and resources that would otherwise be spent on dealing with risks associated with the Bluetooth unit and/application.

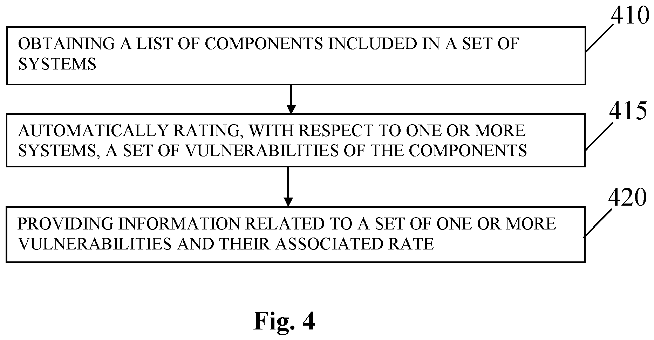

Reference is made to Fig. 4, which shows a flowchart of a method according to illustrative embodiments of the present invention. As shown in block 410, a method according to embodiments of the invention includes obtaining a list of components included in a set of systems. For example, VSM 282 obtains a list of components such as ECUs 250, sensors 251 and applications and services 254 which are included in systems 260, 261 and 262. As described, the list of components can be obtained from manufacturers or providers of systems 260, 261 and 262 or the list can be obtained automatically, e.g., by monitoring messages over a network or bus in systems 260, 261 and 262 or by sending probe or other messages which cause components to identify themselves.

As shown in block 415, a method according to embodiments of the invention includes automatically rating, prioritizing, scoring, sorting, categorizing, classifying or otherwise organizing a set of vulnerabilities of the components of the systems. For example, a specific vulnerability of a specific ECU 250 (e.g., an ECU 250 which controls the telematics system of a car) can be rated or scored, by VSM 282, "7" in a scale of 0-10 when the telematics ECU 250 is included in system 260 and the same specific vulnerability of the same specific ECU 250 can be rated, by VSM 282, "4" in the same scale of 0-10 when the telematics ECU 250 is included in system 261, e.g., when the telematics ECU 250 is a standalone unit. Similarly, the score or rate of a vulnerability of an application or service 254 can be dependent on the system in which the application or service 254 is included or it may be dependent upon vulnerabilities of applications or services 254 in the system. A score or rate of a vulnerability of a component as referred to herein can be viewed as a rate of danger to a system posed by the vulnerability, namely, the higher the score or rate VSM 282 assigns a vulnerability the more dangerous is the vulnerability to the system. In embodiments, automatically rating, prioritizing, scoring, sorting, categorizing, classifying or otherwise organizing a set of vulnerabilities with respect to one or more systems, a set of vulnerabilities of the components is done according to at least one of: a risk severity of a vulnerability, characteristics of a vulnerability, a component or characteristics of the component, a system or characteristics of the system, usage of a system or a component, a configuration parameter, and the number of systems including a common component. Rating according to a risk severity of a vulnerability, can be, for example, according to the risk severity as indicated by a CVSS or CVE standard. Characteristics of a vulnerability according to which VSM 282 scores or prioritizes a vulnerability can be, for example, level of access required to exploit a vulnerability, the resources required to exploit the vulnerability, privileges required to exploit the vulnerability, resources or assets that can be attacked by exploiting the vulnerability and the like. Characteristics of a vulnerability according to which VSM 282 scores or prioritizes a vulnerability can be recorded, e.g., in vulnerabilities characteristics 305 or in vulnerabilities set 302 as described.

In embodiments, automatically rating, prioritizing, scoring, sorting, categorizing, classifying or otherwise organizing a set of vulnerabilities with respect to one or more systems, a set of vulnerabilities of the components is done according to a component or characteristics of the component. For example, VSM 282 scores or prioritizes vulnerabilities of critical components such as the braking system higher than vulnerabilities that can render the air conditioning system inoperative.

In embodiments, automatically rating, prioritizing, scoring, sorting, categorizing, classifying or otherwise organizing a set of vulnerabilities with respect to one or more systems, a set of vulnerabilities of the components is done according to a system or characteristics of the system.. For example, VSM 282 scores or prioritizes vulnerabilities of critical systems or subsystems higher than vulnerabilities of noncritical systems or subsystems. For example, a navigation system is considered less critical than a system or subsystem which controls the engine of a vehicle, and VSM 282 may set or adjust the risk severities of these systems accordingly.

In embodiments, automatically rating, prioritizing, scoring, sorting, categorizing, classifying or otherwise organizing a set of vulnerabilities with respect to one or more systems, a set of vulnerabilities of the components is done according to usage of a system or a component. For example, VSM 282 sets a risk severity of entertainment systems to be lower than those of navigation systems.

In embodiments, automatically rating, prioritizing, scoring, sorting, categorizing, classifying or otherwise organizing a set of vulnerabilities with respect to one or more systems, a set of vulnerabilities of the components is done according to a configuration parameter. For example, a configuration parameter can indicate risk severities for different car models, specific components (e.g., specific ECUs 250), different counties where systems are used and so on.

In embodiments, automatically rating, prioritizing, scoring, sorting, categorizing, classifying or otherwise organizing a set of vulnerabilities with respect to one or more systems, a set of vulnerabilities of the components is done according to the number of systems including a common component. For example, VSM 282 sets the risk severity of a vulnerability of an ECU 250 which is installed in millions of vehicles to be higher than that of an ECU 250 which is installed in a limited number of vehicles. Such automatic rating or scoring vulnerabilities according to the number of related components which an attacker can attack is of great advantage, e.g., since it enables mitigating risks according to the chance or probability that an attack will occur. Such automatic rating or scoring vulnerabilities according to the number of related components, e.g., the number of cars that are in danger is not done by any system or method as known in the art. As shown in block 420, a method according to embodiments of the invention includes providing information related to a set of one or more vulnerabilities and their associated rate. For example, VSM 282 provides a sorted or prioritized list of vulnerabilities with respect to a specific ECU 250 or with respect to a specific car model. Per a configuration parameter, VSM 282 can provide the list sorted according to severity or criticality, according to the effort or time the vulnerabilities can be fixed, according to the time required of mitigating a risk and so on. For example, vulnerabilities related to hardware can take a long time to fix since they may require manufacturing and installing new hardware while software related vulnerabilities can be fixed faster, accordingly VSM 282 can present to a user a list which is sorted according to time required. Vulnerabilities present in millions of cars are clearly more urgent than those present in a limited number of cars or models, accordingly, VSM 282 can sort a list provided to a user according to the urgency of mitigating the risk involved.

In the detailed description, numerous specific details are set forth in order to provide a thorough understanding of the invention. However, it will be understood by those skilled in the art that the present invention may be practiced without these specific details. In other instances, well-known methods, procedures, and components, modules, units and/or circuits have not been described in detail so as not to obscure the invention. Some features or elements described with respect to one embodiment may be combined with features or elements described with respect to other embodiments. For the sake of clarity, discussion of same or similar features or elements may not be repeated.

Although embodiments of the invention are not limited in this regard, discussions utilizing terms such as, for example, "processing," "computing," "calculating," "determining," "establishing", "analyzing", "checking", or the like, may refer to operation(s) and/or process(es) of a computer, a computing platform, a computing system, or other electronic computing device, that manipulates and/or transforms data represented as physical (e.g., electronic) quantities within the computer's registers and/or memories into other data similarly represented as physical quantities within the computer's registers and/or memories or other information non-transitory storage medium that may store instructions to perform operations and/or processes. Although embodiments of the invention are not limited in this regard, the terms "plurality" and "a plurality" as used herein may include, for example, "multiple" or "two or more". The terms "plurality" or "a plurality" may be used throughout the specification to describe two or more components, devices, elements, units, parameters, or the like. The term set when used herein may include one or more items.

Unless explicitly stated, the method embodiments described herein are not constrained to a particular order in time or to a chronological sequence. Additionally, some of the described method elements can occur, or be performed, simultaneously, at the same point in time, or concurrently. Some of the described method elements may be skipped, or they may be repeated, during a sequence of operations of a method.

In the description and claims of the present application, each of the verbs, "comprise" "include" and "have", and conjugates thereof, are used to indicate that the object or objects of the verb are not necessarily a complete listing of components, elements or parts of the subject or subjects of the verb. Unless otherwise stated, adjectives such as "substantially" and "about" modifying a condition or relationship characteristic of a feature or features of an embodiment of the disclosure, are understood to mean that the condition or characteristic is defined to within tolerances that are acceptable for operation of an embodiment as described. In addition, the word "or" is considered to be the inclusive "or" rather than the exclusive or, and indicates at least one of, or any combination of items it conjoins.

Descriptions of embodiments of the invention in the present application are provided by way of example and are not intended to limit the scope of the invention. The described embodiments comprise different features, not all of which are required in all embodiments. Some embodiments utilize only some of the features or possible combinations of the features. Variations of embodiments of the invention that are described, and embodiments comprising different combinations of features noted in the described embodiments, will occur to a person having ordinary skill in the art. The scope of the invention is limited only by the claims.

While certain features of the invention have been illustrated and described herein, many modifications, substitutions, changes, and equivalents may occur to those skilled in the art. It is, therefore, to be understood that the appended claims are intended to cover all such modifications and changes as fall within the true spirit of the invention.

Various embodiments have been presented. Each of these embodiments may of course include features from other embodiments presented, and embodiments not specifically described may include various features described herein.

## Claims

1. A method comprising:
obtaining a list of components included in a set of systems;
automatically associating, with respect to one or more systems, a set of vulnerabilities of the components with a respective set of ratings, according to at least one of:
a risk severity of a vulnerability,
characteristics of a vulnerability,
a component or characteristics of the component,
a system or characteristics of the system,
usage of a system or a component,
a configuration parameter, and
the number of systems including a common component; and
providing information related to a set of one or more vulnerabilities and their associated rate.

2. The method of claim 1, comprising:
receiving an indication of a newly identified vulnerability;
automatically adding the newly identified vulnerability to the set of vulnerabilities to produce an updated set of vulnerabilities; and
automatically rating, with respect to the systems, the updated set of vulnerabilities.

3. The method of claim 1 or 2, comprising automatically suggesting, with respect to a vulnerability of a component in the list and an associated risk severity, an alternative component which does not suffer from the vulnerability and the associated risk severity;
wherein suggesting the alternative component is based on at least one of:
a risk severity of the vulnerability,
vulnerabilities of the component and of the alternative component,
characteristics and usage of the component and of the alternative component,
compatibility of the component and of the alternative component, and
resources required for replacing the component by the alternative component.

4. The method of any one of the preceding claims, comprising identifying, with respect to a vulnerability, a first set of versions of a component that suffers from the vulnerability and a second set of versions of the component that does not suffer from the vulnerability.

5. The method of any one of the preceding claims, wherein a component included in the system is one of: a software component, a hardware component, and a combination thereof.

6. The method of any one of the preceding claims, wherein a risk severity of a first vulnerability of a first component is determined according to at least one of:
a second vulnerability of the first component,
an inclusion of a second component in the same system, and
a vulnerability of a second component included in the same system.

7. The method of any one of the preceding claims, wherein the rating is performed upon at least one of:
determining a component was added to a system and updating the list of components,
determining a component was removed from a system and updating the list of components, and
determining whether a component was updated or modified.

8. The method of any one of the preceding claims, comprising updating the list of components according to at least one of:
information received from an external source, and
automatically discovering a component in the system.

9. The method of any one of the preceding claims, wherein a risk severity of a vulnerability is determined based on at least one of:
common vulnerability enumeration (CVE) metrics,
common vulnerability scoring system (CVSS) data,
a time since the vulnerability was reported/published/exposed/known,
the number of people exposed to the existence of the vulnerability,
characteristics of a component having the vulnerability,
types and number of components in a system,
interfaces of a component having the vulnerability,
a protocol used, and
automotive or internet of things (IoT) standards.

10. The method of any one of the preceding claims, wherein the risk severity is determined according to an aspect related to at least one of: privacy, safety, operational and digital commerce.

11. The method of any one of the preceding claims, wherein the risk severity is determined according to at least one of:
a system,
an exploitability,
a context of a system,
a usage of a system,
architecture, function, attributes, interfaces,
an operational mode of a system,
components included in a system,
a type/functionality/context/usage/`operational mode' of at least some of the components in a system, and
a regulation.

12. The method of any one of the preceding claims, comprising automatically selecting to update a development management system according to a risk level of a vulnerability.

13. The method of any one of the preceding claims, wherein the risk severity is determined according to a level of protection of code and data in a component.

14. A system comprising:
one or more interfaces for communication; and
a data processing circuit configured to execute a method according to any one of the claims 1 to 13.

15. A computer program comprising instructions which, when the program is executed by a computer, cause the computer to carry out a method of any one of the claims 1 to 13.
